(19) Europäisches Patentamt
European Patent Office
Office européen des brevets

(11) Veröffentlichungsnummer: **0 303 891**
**A2**

(12) # EUROPÄISCHE PATENTANMELDUNG

(21) Anmeldenummer: 88112586.8

(22) Anmeldetag: 03.08.88

(51) Int. Cl.4: **C08G 63/18 , C08L 67/02**

(30) Priorität: 15.08.87 DE 3727254

(43) Veröffentlichungstag der Anmeldung: 22.02.89 Patentblatt 89/08

(84) Benannte Vertragsstaaten: DE FR GB IT

(71) Anmelder: **BAYER AG**
**Konzernverwaltung RP Patentabteilung**
**D-5090 Leverkusen 1 Bayerwerk(DE)**

(72) Erfinder: **Heitz, Walter, Prof. Dr.**
**Am Schmidtborn 5**
**D-3575 Kirchhain(DE)**
Erfinder: **Schmidt, Hans-Werner, Dr.**
**Carl-Strehl-Strasse 23**
**D-3550 Marburg(DE)**
Erfinder: **Hohlweg, Martin**
**Ginnheimer Landstrasse 186**
**D-6000 Frankfurt a/d Main(DE)**

(54) **Neue aromatische Polyester, Verfahren zu deren Herstellung sowie deren Verwendung zur Herstellung von molekular verstärkten Polymeren.**

(57) Die Erfindung betrifft neue aromatische Homopolyester auf Basis von substituierten 4,4′-Biphenyldicarbonsäuren und substituierten Hydrochinonen, 4,4′-Biphenyldiolen und substituierten Terephthalsäuren, substituierten 4,4′-Binaphthyldicarbonsäuren und substituierten Hydrochinonen sowie 4,4′-Binaphthyldiolen und substituierten Terephthalsäuren, Verfahren zu deren Herstellung aus Hydrochinonderivaten und Terephthalsäure sowie deren Verwendung zur Herstellung von molekular verstärkten Polymeren.

EP 0 303 891 A2

Xerox Copy Centre

**Neue aromatische Polyester, Verfahren zu deren Herstellung sowie deren Verwendung zur Herstellung von molekular verstärkten Polymeren.**

Die Erfindung betrifft neue aromatische Homopolyester auf Basis von substituierten 4,4′-Biphenyldicarbonsäuren und substituierten Hydrochinonen, 4,4′-Biphenyldiolen und substituierten Terephthalsäuren, substituierten 4,4′-Binaphthyldicarbonsäuren und substituierten Hydrochinonen sowie 4,4′-Binaphthyldiolen und substituierten Terephthalsäuren, Verfahren zu deren Herstellung aus Hydrochinonderivaten und Terephthalsäure sowie deren Verwendung zur Herstellung von molekular verstärkten Polymeren.

Bekanntlich sind verschiedene Polymere im allgemeinen nur begrenzt oder überhaupt nicht miteinander molekular mischbar. So können z.B. bei erhöhter Temperatur hergestellte Mischungen zweier verschiedener Polymerer beim Abkühlen sich in Domänen separieren. Dies gilt besonders für Mischungen flüssigkristalliner Polymerer in anderen Polymeren.

Polyester auf der Basis von substituierten 4,4′-Biphenyldicarbonsäuren und substituierten Hydrochinonen sind bekannt (z.B. US-PS 3 786 022, 4 433 132, 4 608 829, Journal of Polymer Science, Part C, Vol. 25, 11-17, 1987). Jedoch ist die Löslichkeit der hier beschriebenen Polyester nicht immer ganz befriedigend und das Eigenschaftsprofil von Abmischungen dieser Polyester mit anderen Polymeren entspricht nicht in allen Fällen dem gewünschten Niveau. Weiterhin sind die Polyester, die Trifluormethyl-Substituenten tragen, nur aufwendig herzustellen.

Es wurde nun gefunden, daß spezielle substituierte Polyester aus substituierten 4,4′-Biphenyldicarbonsäuren und substituierten Hydrochinonen, 4,4′-Biphenyldiolen und substituierten Terephthalsäuren, substituierten 4,4′-Binaphthyldicarbonsäuren und substituierten Hydrochinonen sowie 4,4′-Binaphthyldiolen und substituierten Terephthalsäuren mit vielen anderen Polymeren besser mischbar und besser verträglich sind und über einen weiten Temperaturbereich von -30 bis 250 °C, bevorzugt -30° bis 150 °C, homogene Lösungen und Mischungen miteinander bilden.

Gegenstand der Erfindung sind daher neue Polyester der Formel (I), (Ia), (Ib) und (Ic)

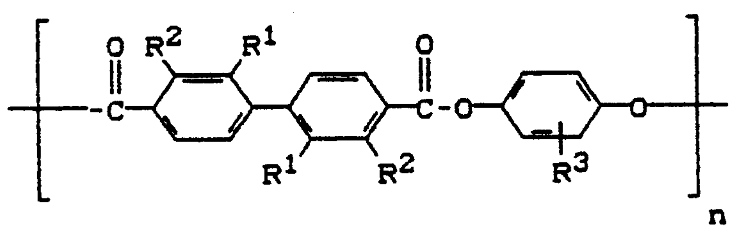 (I),

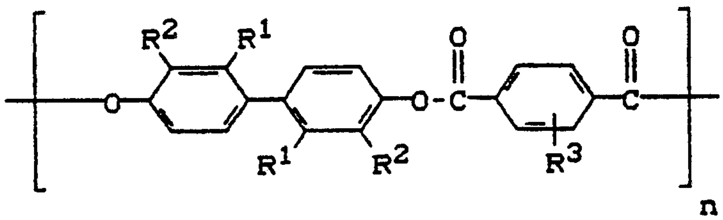 (Ia),

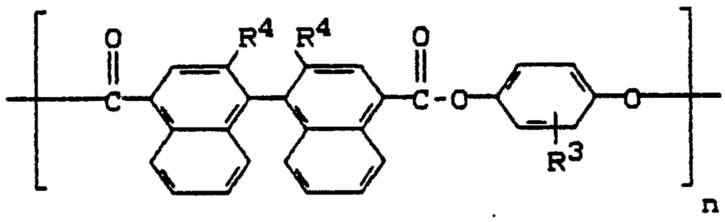 (Ib),

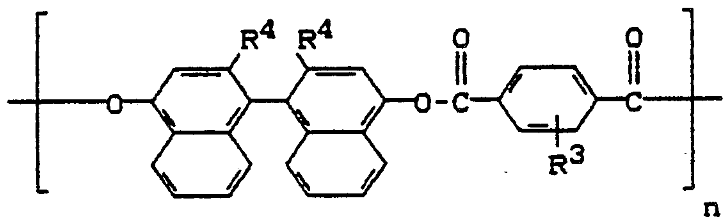 (Ic),

in welchen

$R^1$ für Phenyl, $C_1$-$C_4$-Alkyl, einen Arylalkyl-, Arylalkylether-, Alkylaryl-thioetherrest, mit einem unverzweigten, 2,3,4,5,6,7,8,9 oder 10-Atome enthaltenden Alkylteil, an dessen $\omega$-C-Atom am Ende der Kette ein unsubstituierter 6 bis 24 C-Atome enthaltender Arylteil steht,

$R^2$ für Wasserstoff steht oder zusammen mit $R^1$ einen ankondensierten aromatischen 6-Ring bildet,

$R^3$ für Halogen, $C_1$-$C_4$ Alkyl, einen Arylalkyl-, Arylalkylether-, Alkylaryl-thioetherrest, mit einem unverzweigten, 2,3,4,5,6,7,8,9 oder 10-Atome enthaltenden Alkylteil, an dessen $\omega$-C-Atom am Ende der Kette ein unsubstituierter 6 bis 24 C-Atome enthaltender Arylteil steht, mit der Maßgabe, daß für den Falle, daß $R^1$ für Methyl oder Ethyl steht, $R^3$ für t-Butyl oder Phenyl stehen muß und

$R^4$ für Wasserstoff und $R^1$ steht und

n für eine ganze Zahl von 5 bis 2000 steht.

Als Reste $R^1$ und $R^3$ sind vorzugsweise genannt Methyl, Ethyl, Propyl, iso-Propyl, Butyl, iso-Butyl, tertiär Butyl, Phenyl und Reste der Formeln (II) bis (VII) und außerdem für $R^3$ zusätzlich Chlor und Brom.

H, 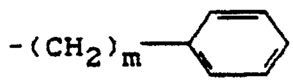 , 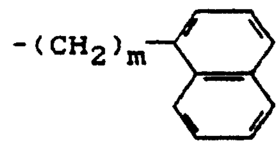 ,

(II) (III)

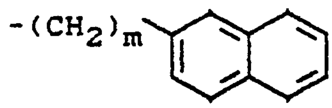 , 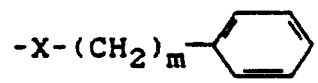 ,

(IV) (V)

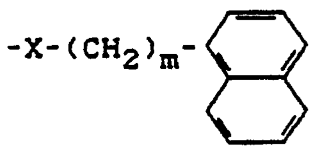 , 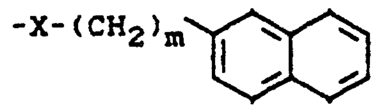

(VI) (VII)

in welchen
m für die Zahl 2,3,4,5,6,7,8,9 oder 10 steht, besonders bevorzugt für die Zahl 2 oder 3 steht und
X für Sauerstoff (O) oder Schwefel (S) steht.

Für den Rest $R^2$ ist Wasserstoff bevorzugt.

Besonders bevorzugt steht $R^1$ für $C_1$-$C_4$-Alkyl, $R^2$ für Wasserstoff und $R^3$ für tertiär Butyl oder Phenyl.

Die neuen Polyester haben Molekulargewichte $M_n$ von 2500 bis $10^6$, vorzugsweise von 5000 bis 500.000.

Ein weiterer Gegenstand der Erfindung ist ein Verfahren zur Herstellung der Polyester der Formel (I)

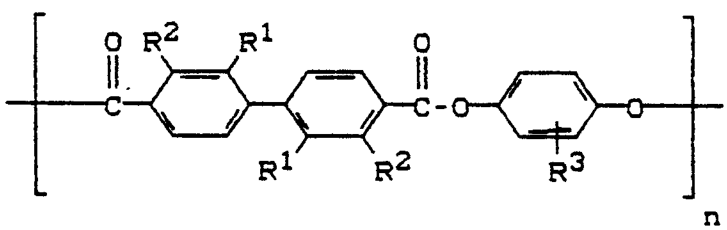 (I),

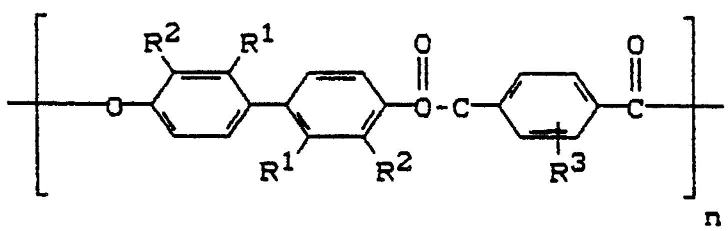 (Ia),

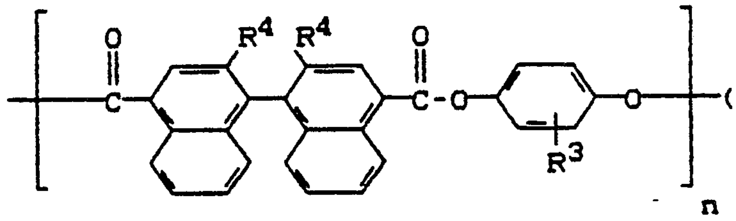
(Ib),

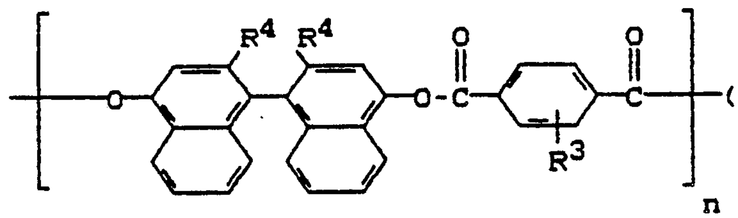
(Ic),

in welcher
$R^1$ für Phenyl, $C_1$-$C_4$-Alkyl, einen Arylalkyl-, Arylalkylether-, Alkylaryl-thioetherrest, mit einem unverzweigten, 2,3,4,5,6,7,8,9 oder 10-Atome enthaltenden Alkylteil, an dessen ω-C-Atom am Ende der Kette ein unsubstituierter 6 bis 24 C-Atome enthaltender Arylteil steht,
$R^2$ für Wasserstoff steht oder zusammen mit $R^1$ einen ankondensierten aromatischen 6-Ring bildet,
$R^3$ für Halogen, $C_1$-$C_4$-Alkyl, einen Arylalkyl-, Arylalkylether-, Alkylaryl-thioetherrest, mit einem unverzweigten, 2,3,4,5,6,7,8,9 oder 10-Atome enthaltenden Alkylteil, an dessen ω-C-Atom am Ende der Kette ein unsubstituierter 6 bis 24 C-Atome enthaltender Arylteil steht, mit der Maßgabe, daß für den Falle, daß $R^1$ für Methyl oder Ethyl steht, $R^3$ für t-Butyl oder Phenyl stehen muß und
n für eine ganze Zahl von 5 bis 2000 steht,
dadurch gekennzeichnet, daß
Hydrochinone der Formel (VIII)

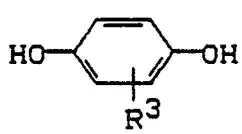
(VIII),

in welcher der Rest $R^3$ die bei Formel (I) angegebene Bedeutung hat,

a) mit substituierten 4,4′-Biphenyldicarbonsäurederivaten wie den Halogeniden der Formel (IX)

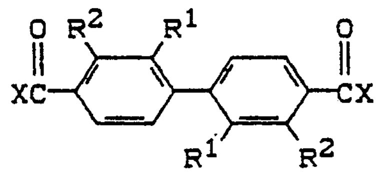
(IX),

in welcher
X für Halogen wie Cl, Br steht, und $R^1$ und $R^2$ die bei Formel (I) angegebene Bedeutung haben, gegebenenfalls in üblichen organischen Lösungsmitteln bei Temperaturen von 0 bis 250° C, vorzugsweise 20 bis 150° C in Gegenwart von gegebenenfalls äquivalenten Mengen eines tert.-Amins (bezogen auf das 4,4′-Biphenyldicarbonsäurederivat der Formel (IX)) umgesetzt werden oder

b) acylierte Hydrochinone der Formel (VIIIb)

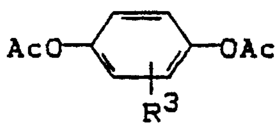

(VIIIb),

in welcher
der Rest $R^3$ die bei Formel (I) angegebene Bedeutung hat und
Ac für $C_1$-$C_{10}$-CO steht,
mit 4,4′-Biphenylcarbonsäure der Formel (IXa)

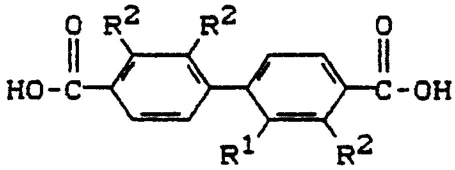

(IXa),

in welcher
$R^1$ und $R^2$ die bei Formel (I) angegebene Bedeutung haben,
gegebenenfalls in üblichen organischen Lösungsmitteln bei Temperaturen von 50 bis 350° C oder in der Schmelze in Abwesenheit von Lösungsmitteln bei Temperaturen von 50 bis 400° C miteinander umgesetzt werden oder

c) Hydrochinone der Formel (VIII) mit Estern, vorzugsweise Arylestern der 4,4′-Biphenyldicarbonsäure der Formel (IXb)

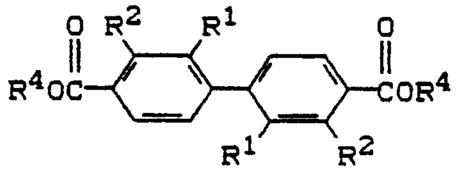

(IXb),

in welcher
$R^1$ und $R^2$ die bei Formel (I) angegebene Bedeutung haben und
$R^4$ für $C_1$-$C_4$-Alkyl, $C_6$-$C_{24}$-Aryl, $C_7$-$C_{30}$-Aralkyl bzw. -Alkylaryl, vorzugsweise $C_6$-$C_{24}$-Aryl, steht,
in Gegenwart üblicher Umesterungskatalysatoren in üblichen Lösungsmitteln, gegebenenfalls bei einem Unterdruck von 0,1 bis $10^{-4}$ bar, umgesetzt werden.

Die Herstellung erfolgt für Polyester der Formeln Ia, Ib und Ic analog.

Als übliche organische Lösungsmittel für Methoden a, b und c kommen in Betracht z.B. chlorierte Kohlenwasserstoffe wie Tetrachlorkohlenstoff, Perchlorethylen, Chloroform, Dichlormethan, aromatische Lösungsmittel wie Toluol, Diphenylether, Chlornaphthalin, Diphenylsulfon, Ketone wie Aceton, Butanon usw..

Bei Methode a) können gegebenenfalls tertiäre Amine in mindestens äquivalenten Mengen bezogen auf das Terephthalhalogenid, zugegen sein, z.B. Pyridin, Triethylamin usw.. Gegebenenfalls kann das tertiäre Amin als Lösungsmittel eingesetzt werden.

Die Lösung des 4,4′-Biphenyldicarbonsäuredihalogenids z.B. in Toluol wird in der Lösung des substituierten Hydrochinons in z.B. Toluol zugetropft und anschließend auf Temperaturen von z.B. 100° C - 250° C für eine Stunde erhitzt. Das Polymere wird abfiltriert und durch Waschen mit Wasser und Alkohol (z.B. Methanol) von organischen Lösungsmitteln und gegebenenfalls von Salzen (wenn z.B. ein tert.-Amin zugegeben war) befreit. Wurde in Gegenwart eines tert.-Amins umgesetzt, beträgt die Umsetzungstemperatur 80 - 120° C.

Bei Methode Ic) soll ein üblicher Katalysator, der Umesterungsreaktionen beeinflussen kann, in Mengen von 0,001 bis 0,1 mol bezogen auf 4,4′-Biphenyldicarbonsäureester der Formel (IXb) im Reaktionsgemisch anwesend sein. Es können übliche Umesterungskatalysatoren, z.B. Metallsalze und Verbindungen wie Manganacetat, Zinkchlorid, Titantetrapropylat, Zinndibutyldilaurat oder Katalysatorkombinationen wie Zirkontetrapropylat/4-Dimethylaminopyridin oder Metalle wie Magnesium verwendet werden. Die Reaktion wird in hochsiedenden Lösungsmitteln, wie Naphthalinmethylether, vorzugsweise aber ohne Lösungsmittel durchgeführt. Die Reaktionskomponenten werden auf etwa 300° C, vorzugsweise bis dicht unter den

Schmelzpunkt des sich bildenden Polymeren, für 1 bis 5 Stunden erhitzt und bei vermindertem Druck bei 280 bis 350° C nachkondensiert.

Pro Mol Hydrochinon der Formel (VIII) wird etwa 1 Mol 4,4′-Biphenyldicarbonsäure(derivat) der Formel (IX) eingesetzt.

Die Polymerisationsreaktionen a, b und c können auf übliche Art durchgeführt werden.

Die erfindungsgemäßen Polymeren können zu den flüssigkristallinen Polymeren gerechnet werden. Sie sind jedoch nicht wie bekannte flüssig-kristalline Polymere hochkristallin, schwerlöslich und schlecht mit anderen Polymeren verträglich.

Die erfindungsgemäßen Polymeren können vielmehr in Mengen von 0,1 bis 50 Gew.-%, bevorzugt 0,1-10 Gew.-% (bezogen auf das abzumischende andere Polymere), in anderen Polymeren (molekular dispers) gelöst sein.

Die erfindungsgemäßen Polymeren können in eine Vielzahl anderer Polymerer eingearbeitet werden, z.B. in Thermoplaste wie Polycarbonate, Polyepoxide, ABS, Macrolon, Polyphenylensulfide, (z.B. RYTON®, TEDUR®) Polyetheretherketone, Polyamide, Polyester, Polyethylen, PVC, Polyurethane, Acrylnitril-Butadien-Nitrilkautschuke (NBR), Kautschuke, in Copolymere z.B. Ethylenvinylacetat usw.

Zur Einarbeitung der erfindungsgemäßen Polymeren können diese mit den abzumischenden Polymeren, z.B. nach vermahlen auf höhere Temperaturen bis ca. 400° C erhitzt werden. Beim Abkühlen auf Raumtemperatur wird dann eine homogene Mischung (Legierung) erhalten.

Die mit den erfindungsgemäßen Polymeren hergestellten Polymermischungen haben ausgezeichnete Wärmeformbeständigkeit über einen weiten Temperaturbereich von -100 bis ca. 200° C, gute Kerbschlagzähigkeiten, Elastizitätsmodule, hohe Kratzfestigkeit und ausgezeichnete Scherfestigkeit.

Weiterhin können die erfindungsgemäßen Polyester der Formel (I), z.B. in einem Monomeren wie Styrol, Methylstyrol, Methylmethacrylat, Epoxide, Diisocyanate/Diol systeme oder Monomermischungen wie Styrol/Acrylnitril usw. gelöst werden, anschließend wird dieses dann polymerisiert. Die Polymerisation der Monomeren erfolgt unter üblichen Bedingungen. So werden Vinylmonomere durch Zusatz von radikalischen Initiatoren, Epoxide durch Zusatz von Polyaminen und Diisocyanat/Diolsysteme durch Zusatz von Zinnkatalysatoren polymerisiert. Es entsteht eine gute Polymer/Polymer-Mischung. Weiterhin können die Mischungen auch über ein gemeinsames Lösungsmittel oder Lösungsmittelgemisch erfolgen.

Aufgrund ihres Eigenschaftsprofils können derartige Mischungen einer Vielzahl von möglichen Verwendungen zugeführt werden, z.B. zur Herstellung von Werkstoffen, Spritzgußtypen, Folien, Filmen, Fasern und Fäden usw.

Mischungen der Polyester mit Polycarbonat wie Makrolon® zeichnen sich z.B. durch eine deutliche Erhöhung des E-Moduls aus, vergleichen z.B. mit dem E-Modulus des reinen Polycarbonats.

## Beispiele

Die zur Herstellung der erfindungsgemäßen Polyester der Formel (I) benötigten 4,4′-Biphenyldicarbonsäuren und deren Derivate sowie die benötigten substituierten Hydrochinone sind bekannt und/oder können nach bekannten Methoden hergestellt werden.

So können die 4,4′-Biphenyldicarbonsäure(derivate) z.B. nach J. Polym. Sci., Polym. Chem. Ed. 16, 3151 (1978), Ber. Dtsch. Chem. Ges. 73, 898 (1940) u.s.w. hergestellt werden.

Substituierte Hydrochinone können z.B. nach Makromol. Chem. 37, 198 (1960) hergestellt werden.

Herstellung von 2,2′-Bis(methyl)-4,4′-biphenyldicarbonylchlorid nach der Thionylchloridmethode:

15 g (56 mmol) 2,2′-Bis(methyl)-4,4′-biphenyldicarbonsäure, 90 ml (1,24 mol) Thionylchlorid und zwei Tropfen DMF wurden 5 h unter $N_2$ refluxiert. Überschüßiges Thionylchlorid wurde im Vakuum abdestilliert. Der feste Rückstand wurde aus trockenem Methylheptan umkristallisiert, 13,8 g (80% d. Th.), Schmp. 92-93° C.

Herstellung der Polyester:

Die Polyester können durch Polykondensation in der Schmelze und in Lösung hergestellt werden.

Beispiel a)

Herstellung eines Polyesters aus 2,2′-Bis-(methyl)-4,4′-diphenyl-dicarbonyl-chlorid und t-Butylhydrochinon in der Schmelze

In einem durch Beflammung getrockneten Kolben mit Magnetrührer wurden 2,5201 g (8,204 mmol) 2,2′-Bis(methyl)-4,4′-biphenyl-dicarbonylchlorid und 1,3636 g (8,204 mmol) t-Butylhydrochinon unter Inertgasatmosphäre (z.B. $N_2$) zusammengegeben. Der Kolben wurde mit einem Blasenzähler ausgestattet und ein langsamer Inertgasstrom wurde durch den Kolben geleitet. Dann wurde langsam auf 100° C erhitzt und die Entwicklung von HCl setzte ein. Als eine homogene Schmelze gebildet war, wurde diese immer viscoser. Nach 1-2 h erstarrte die Schmelze und wurde nach 10 h bei 100° C gehalten. Dann wurde die Temperatur 3 h bei 260° C gehalten und nochmals 3 h bei 260° C und einem Druck von 5 Pa. Der Polyester wurde dann in 40 ml $CHCl_3$ gelöst, filtriert und mit 600 ml Alkohol ($CH_3OH$) gefällt und abfiltriert. Der Polyester wurde nochmals gelöst und gefällt und bei 80-100° C für 8 h getrocknet. Ausbeute 86% (d. Th.), $\eta_{inh}$ = 1,38 dl/g.

Bei mehreren Ansätzen zur Herstellung dieses Polyesters wurden Produkte mit inherenten Viskositäten von 1,38 -3,04 dl/g erhalten.

Beispiel b)

Herstellung der Polyester durch Polykondensation in Lösung

In einem mit der Flamme getrockneten Kolben mit Magnetrührer wurden unter Inertgasatmosphäre (z.B. $N_2$) 2,5307 g (8,238 mmol) 2,2′-Bis(methyl)-4,4′-biphenyldicarbonylchlorid und 1,3694 g (8,238 mmol) t-Butylhydrochinon, 2,5 ml 1,1,2,2-Tetrachlorethan (destilliert über $P_2O_5$) und 3 ml Pyridine (destilliert über KOH, aufbewahrt über Molekularsieb) bei leichtem Inertgasüberdruck zusammengegeben und 20 h bei 120° C gehalten. Der Polyester wurde in 600 ml Alkohol ($CH_3OH$) gefällt, abfiltriert und in $CHCl_3$ gelöst und mit Alkohol ($CH_3OH$) gefällt, abfiltriert und bei 80 - 100° C bei 5 Pa getrocknet. Ausbeute 86% (d. Th.), $\eta_{inh}$ 0,64 dl/g.

Die inherenten Viscositäten wurden bei 45° C in 4-Chlorphenol bestimmt, bei einer Konzentration von 0,5 g/dl.

Beispiel c)

Herstellung von 1,1′-Binaphthyl-4,4′-dicarbonsäuredichlorid

Zur Synthese von 1,1′-Binaphthyl-4,4′-dicarbonsäure wurde 4,4′-Dimethyl-1,1′-binaphthyl, das nach bekannten Verfahren erhalten werden kann (bezüglich des 2,2′-dimethylsubstituierten Isomeren vgl.: N. Maigrot, J.-P. Mazaleyrat, Synthesis 317 (1985) benutzt.

In einem 1 Liter Stahlautoklaven mit Rührwerk wurden 22,52 g (80 mmol) 4,4′-Dimethyl-1,1′-binaphthyl und 71,52 g (0,24 mol) Natriumdichromat mit 600 ml Wasser versetzt. Es wurde unter einer Kohlendioxidatmosphäre (Anfangsdruck: 35 bar bei Raumtemperatur) 17 Stunden bei 230° C gerührt, wobei der Druck auf 50 bar anstieg. Die Reaktionsmischung wurde im alkalischen Milieu mit Toluol und Ether ausgeschüttelt und mit 6n bzw. 3n Salzsäure die 1,1′-Binaphthyl-4,4′-dicarbonsäure ausgefällt und abfiltriert (16,90 g (62 % d.Th.), Smp. 222-225° C).

13,69 g (40 mmol) 1,1′-Binaphthyl-4,4′-dicarbonsäure, 150 ml (2.06 mol) Thionylchlorid und 5 Tropfen Dimethylformamid wurden 5 Stunden unter Stickstoffatmosphäre refluxiert. Die Hauptmenge des überschüssigen Thionylchlorids wurde bei Normaldruck abdestilliert und der verbleibende Rest im Ölpumpenvakuum entfernt. Der feste Rückstand wurde mit trockenem n-Octan behandelt (13,70 g, 90 % d.Th.).

Herstellung eines Polyesters aus 1,1′-Binaphthyl-4,4′-dicarbonsäuredichlorid und tert.-Butylhydrochinon in Lösung

In einem trockenem 100 ml Rundkolben mit Magnetrührer, Ölbad bzw. Salzschmelze, Rückflußkühler und Blasenzähler wurden 1,9090 g (5,034 mmol) 1,1′-Binaphthyl-4,4′-dicarbonsäuredichlorid und 0,7761 g (5,034 mmol) tert.-Butylhydrochinon mit 30 ml Diphenylether unter Inertgasatmosphäre (z.B. Stickstoff) zusammengegeben. Dann wurde auf 100 °C erhitzt, wobei die Edukte sich auflösten und der frei werdende Chlorwasserstoff im Stickstoffstrom ausgetragen wurde. Die Reaktionstemperatur wurde innerhalb von 45 Stunden bis auf 260 °C gesteigert.

Nach der angegebenen Reaktionszeit ist keine HCl-Entwicklung mehr feststellbar (z.B. Indikatorpapier, Silbernitrat-Lösung). Die klare viskose Lösung wurde mit 70 ml Chloroform verdünnt und in Methanol ausgefällt. Der hellgraue flockige Polyester wurde in 100 ml Chloroform gelöst und durch erneutes Ausfällen in Methanol gereinigt. Nach mehrstündigem Trocknen bei 60 °C im Ölpumpenvakuum wurden 2,15 g (90 % d.Th.) erhalten.

Eigenschaften des Polyesters:

Löslichkeit:

in Chloroform und THF ca. 7 %ige Lösungen (w/v) erhältlich

Viskosität, inh.

30 °C, 0,5 %ige THF-Lösung: 1,51 (dl/g)

Molekulargewicht

bezogen auf Polystyrol $M_{N,\ GPC}$: 71.000 (g/mol)

Glastemperatur:

194-196 °C

Flüssigkristallines Verhalten beobachtbar:

270-350 °C

## Ansprüche

1. Polyester der Formel (I)

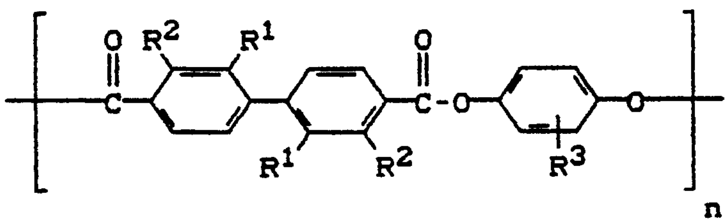

(I),

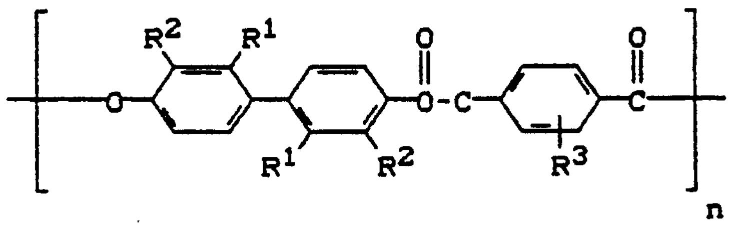

(Ia),

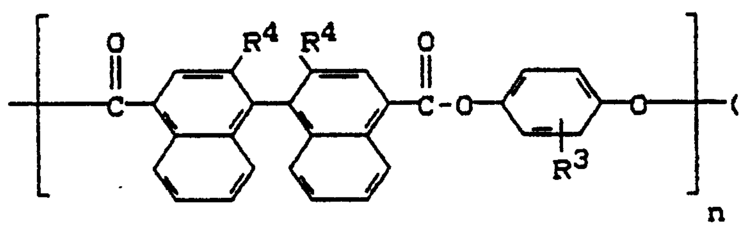

(Ib),

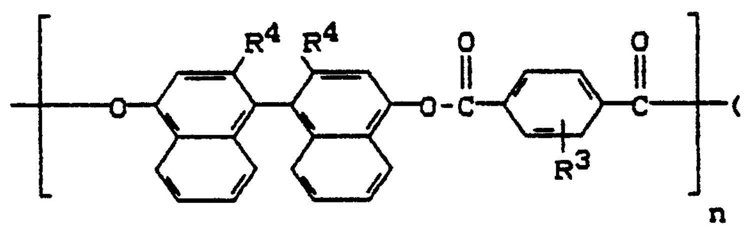

(Ic),

in welcher
$R^1$ für Phenyl, $C_1$-$C_4$-Alkyl, einen Arylalkyl-, Arylalkylether-, Alkylaryl-thioetherrest, mit einem unverzweigten, 2,3,4,5,6,7,8,9 oder 10-Atome enthaltenden Alkylteil, an dessen ω-C-Atom am Ende der Kette ein unsubstituierter 6 bis 24 C-Atome enthaltender Arylteil steht,
$R^2$ für Wasserstoff steht oder zusammen mit $R^1$ einen ankondensierten aromatischen 6-Ring bildet,
$R^3$ für Halogen, $C_1$-$C_4$ Alkyl, einen Arylalkyl-, Arylalkylether-, Alkylaryl-thioetherrest, mit einem unverzweigten, 2,3,4,5,6,7,8,9 oder 10-Atome enthaltenden Alkylteil, an dessen ω-C-Atom am Ende der Kette ein unsubstituierter 6 bis 24 C-Atome enthaltender Arylteil steht, mit der Maßgabe, daß für den Falle, daß $R^1$ für Methyl oder Ethyl steht, $R^3$ für t-Butyl stehen muß und
n für eine ganze Zahl von 5 bis 2000 steht.

2. Verfahren zur Herstellung der Polyester der Formel (I)

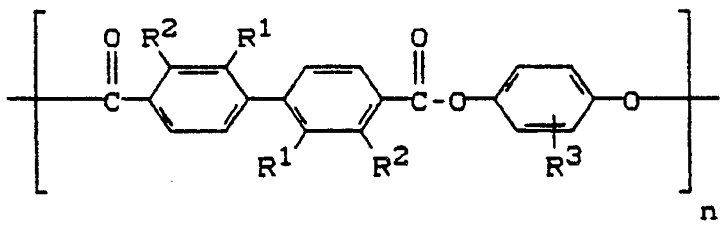

(I),

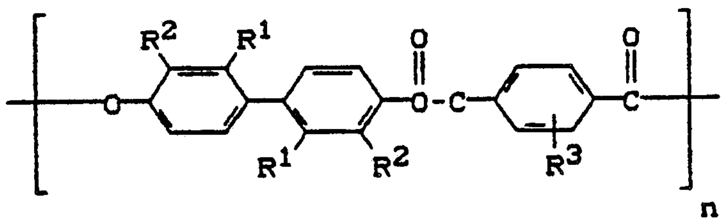

(Ia),

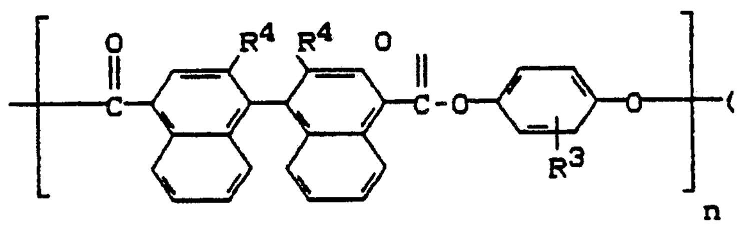

(Ib),

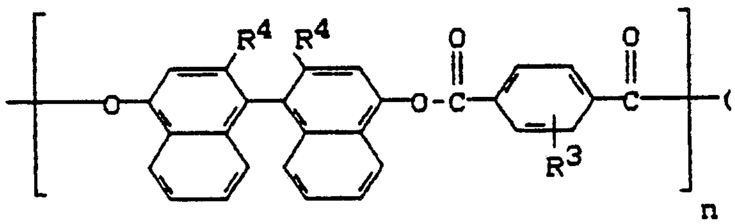

(Ic),

in welchen
$R^1$ für Phenyl, $C_1$-$C_4$-Alkyl, einen Arylalkyl-, Arylalkylether-, Alkylaryl-thioetherrest, mit einem unverzweigten, 2,3,4,5,6,7,8,9 oder 10-Atome enthaltenden Alkylteil, an dessen ω-C-Atom am Ende der Kette ein unsubstituierter 6 bis 24 C-Atome enthaltender Arylteil steht,
$R^2$ für Wasserstoff steht oder zusammen mit $R^1$ einen ankondensierten aromatischen 6-Ring bildet,
$R^3$ für Halogen, $C_1$-$C_4$ Alkyl, einen Arylalkyl-, Arylalkylether-, Alkylaryl-thioetherrest, mit einem unverzweigten, 2,3,4,5,6,7,8,9 oder 10-Atome enthaltenden Alkylteil, an dessen ω-C-Atom am Ende der Kette ein unsubstituierter 6 bis 24 C-Atome enthaltender Arylteil steht, mit der Maßgabe, daß für den Falle, daß $R^1$ für Methyl oder Ethyl steht, $R^3$ für t-Butyl oder Phenyl stehen muß und
n für eine ganze Zahl von 5 bis 2000 steht,
dadurch gekennzeichnet, daß
Hydrochinone der Formel (VIII)

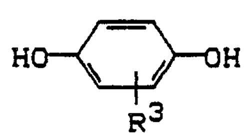

(VIII),

in welcher der Rest $R^3$ die bei Formel (I) angegebene Bedeutung hat,

a) mit substituierten 4,4'-Biphenyldicarbonsäurenderivaten wie den Halogeniden der Formel (IX)

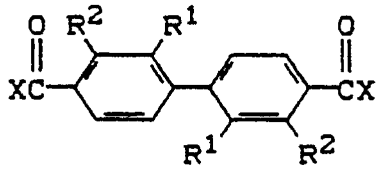

(IX),

in welcher
X für Halogen wie Cl, Br steht, und $R^1$ und $R^2$ die bei Formel (I) angegebene Bedeutung haben, gegebenenfalls in üblichen organischen Lösungsmitteln bei Temperaturen von 0 bis 250 °C, vorzugsweise 20 bis 150 °C in Gegenwart von gegebenenfalls äquivalenten Mengen eines tert.-Amins (bezogen auf das 4,4′-Biphenyldicarbonsäurederivat der Formel (IX)) umgesetzt werden oder

b) acylierte Hydrochinone der Formel (VIIIb)

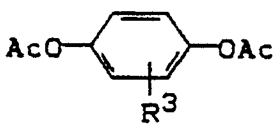

(VIIIb),

in welcher
der Rest $R^3$ die bei Formel (I) angegebene Bedeutung hat und
Ac für $C_1$-$C_{10}$-CO steht,
mit 4,4′-Biphenylcarbonsäure der Formel (IXa)

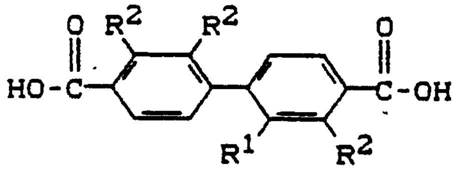

(IXa)

in welcher
$R^1$ und $R^2$ die bei Formel (I) angegebene Bedeutung haben,
gegebenenfalls in üblichen organischen Lösungsmitteln bei Temperaturen von 50 bis 350 °C oder in der Schmelze in Abwesenheit von Lösungsmitteln bei Temperaturen von 50 bis 400 °C miteinander umgesetzt werden oder

c) Hydrochinone der Formel (VIII) mit Estern, vorzugsweise Arylestern der 4,4′-Biphenyldicarbonsäure der Formel (IXb)

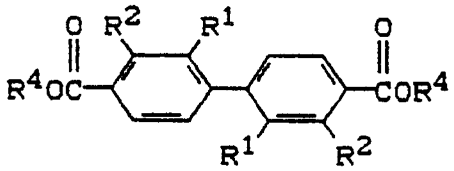

(IXb),

in welcher
$R^1$ und $R^2$ die bei Formel (I) angegebene Bedeutung haben und
$R^4$ für Phenyl, $C_1$-$C_4$-Alkyl, $C_6$-$C_{24}$-Aryl, $C_7$-$C_{30}$-Aralkyl bzw. -Alkylaryl, vorzugsweise $C_6$-$C_{24}$-Aryl, steht,
in Gegenwart üblicher Umesterungskatalysatoren in üblichen Lösungsmitteln, gegebenenfalls bei einem Unterdruck von 0,1 bis $10^{-4}$ bar, umgesetzt werden.

3. Mischungen aus Polyester nach Anspruch 1 mit Thermoplasten.

4. Mischung aus 0,1 bis 50 Gew.% (bezogen auf Polycarbonat) Polyester des Anspruchs 1 und Polycarbonat.